# EUROPEAN PATENT SPECIFICATION

(11) **EP 4 350 038 B1**
(45) Date of publication and mention of the grant of the patent: **11.03.2026**
(21) Application number: 22200162.0
(22) Date of filing: 06.10.2022
(51) Int. Cl.: C25B 3/01, C25B 3/21, C25B 3/26, C25B 9/21, C25B 9/23, C25B 9/50, C25B 9/77, C25B 11/032, C25B 11/049, C25B 11/054, C25B 11/056, C25B 11/061, C25B 11/075, C25B 11/077, C25B 11/081, C25B 11/087, C25B 11/091, C25B 13/08, C25B 15/08, B01D 53/32

(54) **PHOTOELECTROCHEMICAL DEVICE FOR THE CAPTURE AND CONVERSION OF ATMOSPHERIC CARBON DIOXIDE**
PHOTOELEKTROCHEMISCHE VORRICHTUNG ZUR ERFASSUNG UND UMWANDLUNG VON ATMOSPHÄRISCHEM KOHLENDIOXID
DISPOSITIF PHOTOÉLECTROCHIMIQUE POUR LA CAPTURE ET LA CONVERSION DE DIOXYDE DE CARBONE ATMOSPHÉRIQUE

(43) Date of publication of application: 10.04.2024
(73) Proprietor: TOYOTA JIDOSHA KABUSHIKI KAISHA, Aichi-Ken 471-8571 (JP)
(72) Inventor: JOHNSON, Hannah, 1140 BRUSSELS (BE); KINGE, Sachin, 1140 BRUSSELS (BE); TSAMPAS, Michail, 5673 BR NUENEN (NL); ZAFEIROPOULOS, Georgios, 5614 GG EINDHOVEN (NL); GHOSH, Sreetama, 5612 AH EINDHOVEN (NL)
(74) Representative: Cabinet Beau de Loménie

(56) References cited:
- US-A1- 2017 067 171
- US-A1- 2021 040 626
- US-A1- 2021 381 116

## Description

### Field of the Invention

The present invention relates to a carbon dioxide capture and conversion device comprising a first reactor and a second reactor. The first reactor comprises an anion exchange membrane (AEM) placed between a porous (photo)anode and a porous (photo)cathode, wherein the (photo)anode contains or is connected physically or electrically to oxygen evolution and/or carbon dioxide evolution catalyst(s), and the (photo)cathode contains or is connected physically or electrically to an oxygen reduction catalyst. The second reactor comprises a bipolar membrane (BPM) placed between a porous (photo)anode and a porous cathode, wherein the (photo)anode contains or is connected physically or electrically to an oxygen evolution catalyst, and the cathode contains or is connected physically or electrically to a carbon dioxide reduction catalyst. On the porous (photo)cathode of the first reactor, there is a fluid inlet able to carry carbon dioxide, air and water, and on the porous cathode of the second reactor there is a fluid outlet able to carry organic reaction products resulting from carbon dioxide reduction reaction (CO₂RR), the carbon dioxide capture device being configured to transfer fluid exiting the porous (photo)cathode of the first reactor to the porous (photo)anode of the second reactor, and to transfer fluid exiting the porous (photo)anode of the first reactor to the porous cathode of the second reactor.

In preferred embodiments of the present invention, the fluid involved in fluid inlet flow is gaseous, i.e. water in the form of water vapor and carbon dioxide as well as oxygen are captured from ambient air or liquid (for example carbon dioxide can be captured from seawater containing dissolved carbon dioxide in the form of sodium bicarbonate).

### Background Art

Anthropogenic carbon dioxide emissions are causing a global environmental crisis, exemplified by increased propensity for natural disasters (such as flooding and droughts), massive ice melt causing a rise in average sea level and mass extinction of animals and plants which cannot evolve quickly enough to survive the new climatic conditions.

Carbon dioxide levels are hoped to decline in the coming years with the introduction of renewable power sources and improved energy efficiency. However, this alone is insufficient to tackle the climate crisis. Indeed a recent report from the International Panel on Climate Change has shown that carbon capture and storage - the capture of emitted carbon dioxide and its long-term storage, for example underground or recycling, so-called Carbon dioxide Capture and Utilisation (CCU) - will play an important role in limiting the extent of global warming. Specifically, it would be necessary to capture and store 14% of carbon dioxide emissions by 2050 in the 2°C scenario and 32% in the below 2°C scenario.

Whilst solutions to capture concentrated carbon dioxide are well-known and already commercialized on a medium scale, less is being done to tackle carbon dioxide emitted from unavoidable and non-concentrated sources, such as transport (currently), in-built carbon dioxide emissions in manufacturing, which may need to be offset, and agriculture. The capture of non-concentrated carbon dioxide is known as direct air capture.

In the prior art, electrochemical direct air capture is disclosed in WO 2019/136374 A1. Here, proton-coupled redox active species are used, e.g., a quinone, phenazine, alloxazine, isoalloxazine, or polyoxometalate, whose protonation and deprotonation can be controlled electrochemically to modify the pH of an aqueous solution or aqueous suspension. This change in pH can be used to sequester and release CO₂. Alternatively oxidation and reduction cycles of amines, quinones and other ionic liquids can be exploited. The CO₂ can be selectively bound and detached depending on the oxidation state of the molecule, allowing the controlled capture and then release of the gas at a collection portal.

Photoelectrochemical carbon dioxide capture is disclosed in US 8 791 354 B2. A redox mediator is used to transfer the CO₂ from one side of the device to the other through a liquid electrolyte (nonaqueous solvent or an ionic liquid). Rather than taking the electricity to transfer the CO₂ from an external source, light is used to generate charge within a semiconductor (although an external source could also be used, in the night for example). This charge can then be used to push the CO₂ through the device. Additionally this device can be used as a photovoltaic cell when the CO₂ suppression is by-passed.

Apart from amine cycling and (photo) electrochemical direct air capture of carbon dioxide as mentioned above, a membrane matrix approach is known as disclosed in US 7 993 432 B2, US 2015/0165373 A1, US 2012/0220019 A1 and US 10 150 112 B2. A CO₂ sorbent is exposed to a gas mixture and allowed to sorb CO₂. Then this gas is released from the sorbent through a regeneration procedure to create a gas-enriched mixture, the CO₂ gas-enriched mixture is then put in contact with aqueous solution, which selectively absorbs CO₂. The sorbent material could be a solid phase anion exchange membrane with relatively large surface area (air flow with minimum resistance) - open matrix or coated on a support material, such as a cellulose matrix.

As regards CO₂ capture devices, the current solutions are i. energy intensive, ii. high cost and iii. provide little financial incentive for installation (beyond avoiding future carbon taxes, the future cost of which is still undecided). In electrochemical CO₂ conversion, various catalysts have been employed for resulting in different CO₂RR products (e.g. HCOOH, CO, CH₄, CH₃OH, C₂H₄, C₂H₅OH) (Y. Pei et al., Energy, Sci. Eng., 2021;9:1012-1032; S. Nitopi et al., Chem. Rev. 2019, 119, 7610-7672). The prior art focuses on the discovery of materials and electrode architectures that can facilitate the CO₂RR process with pure CO₂ streams directed in electrode/electrolyte interfaces in dedicated devices for CO₂RR, as opposed to a combined capture and conversion device as described in the present invention. Serial device configurations have been proposed for electrochemical CO₂ conversion, however, none directly connected to a photoelectrochemical direct air capture and concentration device as proposed in the present invention. For example, US 9 481 939 B2 discloses an electrochemical conversion device where the anode is open to ambient air, humidified and heated to 50°C. In comparison, the device of the present invention firstly concentrates atmospheric CO₂ from untreated atmospheric air in the first reactor, allowing a concentrated stream to flow into the second reactor.

Additionally, the prior art focuses on the electrochemical conversion of pure CO₂ streams whereas, in the present invention, the CO₂ stream is in a mixture with O₂ in various ratios. Thus in the cathode of the second reactor we have two processes: the CO₂RR and the ORR. The beneficial role of O₂ in the CO₂RR was known from the prior art, but without any implication of coupling the CO₂RR process with a CO₂ capture technology that leads to CO₂ and O₂ mixtures (M. He et al., Nature Communications, 2020, 11:3844).

It is desirable to offer the conversion of CO₂ to more useful products following the CO₂ capture, to avoid the storage of large amounts of CO₂ and to valorise the CO₂ to higher value products. It is preferable to propose a free-standing device - simplifying installation and operation, and avoid the use of exotic chemical species such as redox mediators which are expensive and difficult to scale.

Further relevant art can be found in US2021/381116A1 and US2017/067171A1

### Summary of the Invention

The invention described herein is a device for solar-driven direct air carbon dioxide capture and conversion, in particular renewable energy driven conversion. It utilises an anion exchange membrane to selectively trap carbon dioxide in a first reactor of the device which is transferred, preferably using a bias free current, to a storage area on the other side of the first reactor of the device. A second reactor of the device then converts the carbon dioxide to organic reaction products resulting from carbon dioxide reduction reaction (CO₂RR), through a bipolar membrane (BPM). The device of the present invention can be used to capture CO₂ from ambient air or from point (concentrated) sources. Capturing CO₂ from ambient air is preferable since the solar energy that can be generated per unit area may limit the CO₂ transfer from one side of the membrane to the other when the concentration is too high.

The present invention thus describes a photoelectrochemical, solid-state device for the capture and concentration of CO₂ through oxidation and reduction cycles of oxygen via an anion exchange membrane. This concentrated gas stream then enters a second (photo)electrochemical cell (reactor) which acts a CO₂ converter by transforming the CO₂ into CO₂ electroreduction products (i.e. organic reaction products resulting from carbon dioxide reduction reaction (CO₂RR)).

In this context, the present invention thus provides a carbon dioxide capture device comprising the features of claim 1.

In one preferred embodiment, the anodes of the first and second reactors are both photoanodes. However, the light absorber may, instead of being on the anode side, as photoanode(s), be on the cathode side, in an anode-with-photocathode combination for both the first reactor. Alternatively, a combination of photoanode and photocathode could be used for the first reactor. At least one light absorber should be present for both first and second reactors, and preferably for the second reactor. In an embodiment, if the light absorber is present for the second reactor, it may be outside the second reactor (e.g. an electrically connected photovoltaic cell). Thus, cathode-anode combinations where neither is a light absorber are not appropriate for the first reactor, but other combinations are possible such as photoanode-cathode, anode-photocathode, and photoanode-photocathode.

In the device of the present invention, in its various embodiments, all of the inlets can be inlets for liquids or gases. In preferred embodiments, incoming water is from the ambient air (humidity), and inlets appropriate for gas transport are preferred. Appropriate outlets for the device of the present invention are also in particular ones appropriate for gas and liquid transport. In the device of the present invention, the liquid that can be carried in the fluid inlet of the first reactor may be water, possibly with dissolved species. In particular, it may be seawater which includes water, bicarbonate ions, carbonate ions and sodium chloride, and thus which includes dissolved carbon dioxide in the form of sodium bicarbonate.

The (photo)electrodes used in the present invention, as porous (photo)cathode or porous (photo)anode of the first reactor, or porous cathode or porous (photo)anode of the second reactor, are advantageously deposited or grown on, or supported by, a porous electrically conductive support material. In the sense of the invention, the terms (photo)electrode, (photo)anode and (photo)cathode, include both the terms electrode and photoelectrode, anode and photoanode, and cathode and photocathode. In the practice of the present invention, it is the porous conducting supports that in particular provide a porous character to the (photo)cathode or porous (photo)anode constructs rather than the (photo)cathode or porous (photo)anode materials themselves. Appropriate (photo)electrode support materials for the porous (photo)cathode or porous (photo)anode of the first and/or second reactor, are for example porous (e.g. mesh, felt, foam, cloth, paper) substrates associated with carbon, titanium, tungsten, stainless steel, nickel, or conducting oxides. Such porous support materials, which may also be referred to in the art as "gas diffusion electrodes", may appropriately contain 10 to 90%, more preferably 30 to 80% of voids, preferably allowing for fluid penetration, and in particular gas transfer. The porous support materials may for example be in the form of a mesh or felt. A mesh, a single layer of porous material, may show 10 to 80% of voids (open area), preferably 20-60% of voids. The surface area of the porous support material may appropriately be in the range of 10 to 1000 cm² per cm² geometrical area (for felts). The porous support materials may appropriately show a bulk layer thickness of 1 to 1000 microns, preferably 100 to 400 microns. In terms of photoelectrode thicknesses, at most 5 micrometres and preferably at most 1 micrometre is generally appropriate. On such porous support materials, (photo)cathode or (photo)anode materials selected in particular to promote electrocatalytic reactions, as will be described in more detail below, may be deposited. The thickness of the porous (photo)cathode or porous (photo)anode materials may be less than 5 microns, more preferably less than 1 micron, for example around 300 nm. Appropriate (co)catalyst materials may be provided as a layer preferably of thickness less than 200 nm, more preferably less than 50 nm. For (photo)cathode or (photo)anode materials, co-catalyst materials may provide a performance gain of as much as 100 times. The amount of added (photo)electrode materials selected in particular to promote oxygen reduction or oxygen evolution and/or carbon dioxide evolution, may typically be 1% by mass or less as compared to the mass of the porous support materials, for example in the form of a mesh, felt or foam, and the amount of added (co)catalyst material(s) will typically be less than that of the added materials.

In the device of the present invention, there may be an electrically conducting wire between the (photo)anode and (photo)cathode of the first and/or second reactor. This means that the (photo)anode and (photo)cathode of the first reactor would not necessary need to be close to one another - the (photo)cathode could be in a different chamber provided it has an electrical connection. Most appropriately, the (photo)anode and (photo)cathode are connected through an electrical contact between them, such as a wire. Electricity generated can be used for a lamp or forced convention in advantageous functioning of the device of the invention.

### Brief Description of the Figures

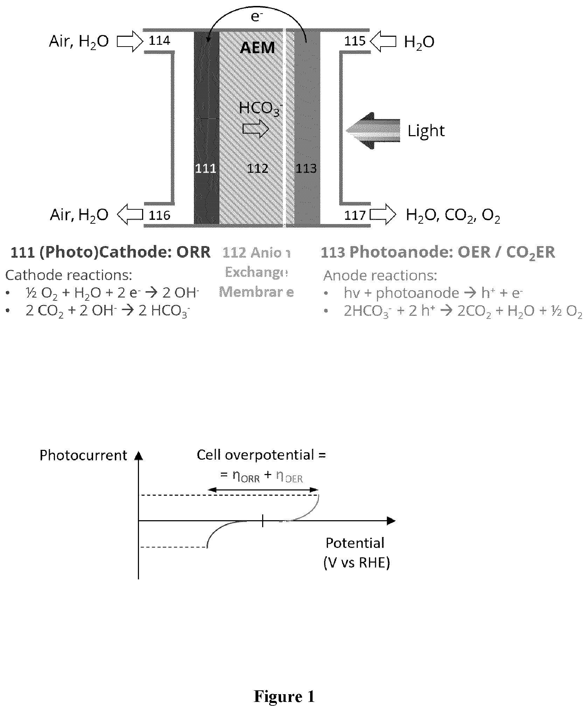

Figure 1 (Fig. 1) shows a schematic diagram of carbon dioxide (CO₂) concentration by the first reactor of the carbon dioxide capture and conversion device of the present invention, comprising a (photo)cathode able to carry out the oxygen reduction reaction (ORR) and/or carbon dioxide reduction reaction and a photoanode able to carry out the oxygen evolution reaction (OER) / carbon dioxide evolution reaction (CO₂ER). The symbol "h⁺" here refers to a positive hole, absorbing electrons.

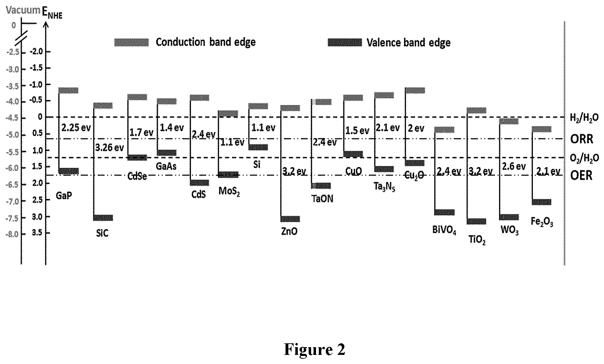

Figure 2 (Fig. 2) shows the band-gap of various semiconductors with potential for oxygen evolution and reduction indicated with dotted, long lines, based on the reference Nanoscale Horiz., 2016, 1, 243-267.

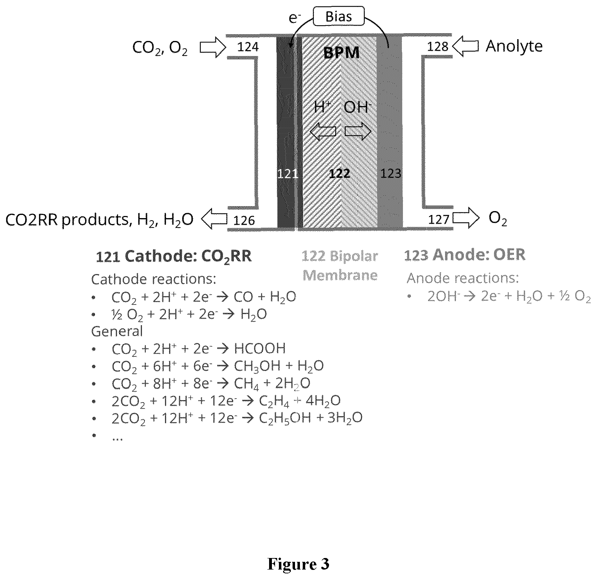

Figure 3 (Fig. 3) shows a schematic diagram of carbon dioxide (CO₂) electroreduction reaction by the second reactor of the carbon dioxide capture and conversion device of the present invention, comprising a (photo)cathode able to carry out the carbon dioxide reduction reaction (CO₂RR) and a (photo)anode able to carry out the oxygen evolution reaction (OER).

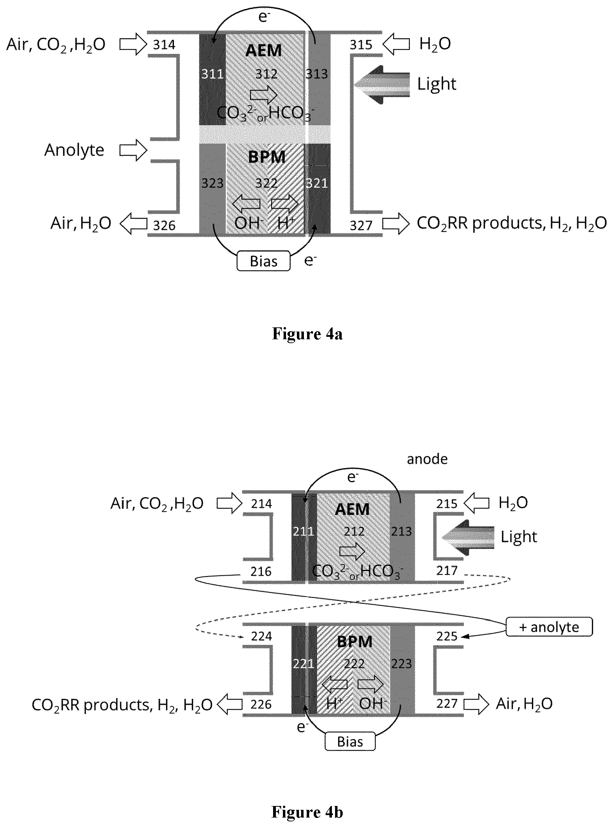

Figure 4 (Fig. 4) shows combined device configurations wherein capture, concentration and conversion functions are combined into one device, shown here in two exemplary configurations as Fig. 4a and Fig. 4b.

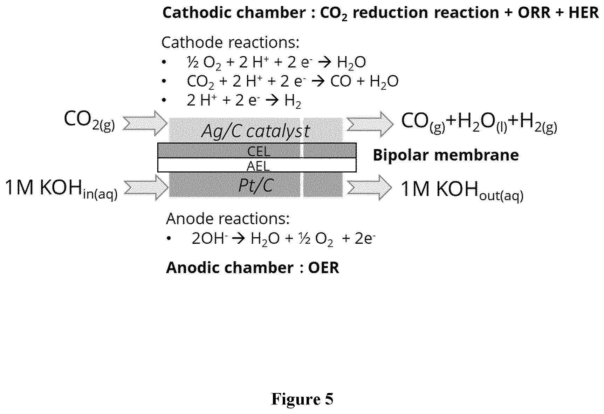

Figure 5 (Fig. 5) shows carbon dioxide (CO₂) capture through absorption in the anion exchange membrane cathodic compartment. In Fig. 5, the light is shining from the (photo)anode side. In the case that there would only be a photocathode (with anode), it would be preferable to shine the light from the opposite side.

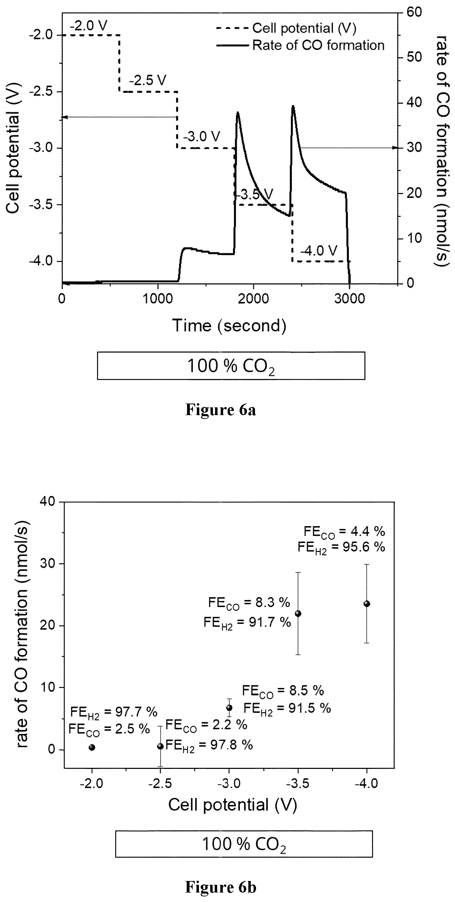

Figure 6 (Fig. 6) shows the carbon dioxide reduction reaction (CO₂RR) in the outlet of the cathode of the second reactor. The inlet of the cathode of the second reactor is the outlet of the (photo)anode of the first reactor. In Fig. 6a and Fig. 6b the experimental data were obtained at various CO₂ to O₂ ratios, corresponding to the fact that selectivity in the (photo)anode of the first reactor is a mix of oxygen evolution reaction (OER) / carbon dioxide evolution reaction (CO₂ER) resulting from conduction of different ionic agents at the anion exchange membrane (AEM), i.e. OH⁻, CO₃²⁻, HCO₃⁻.

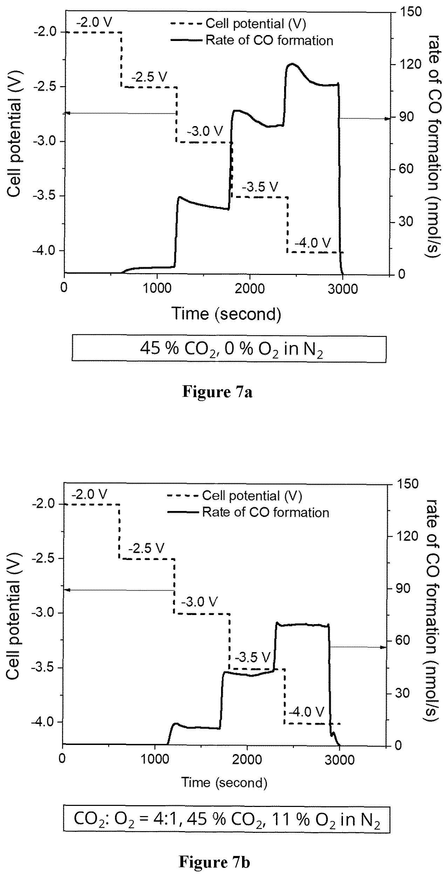

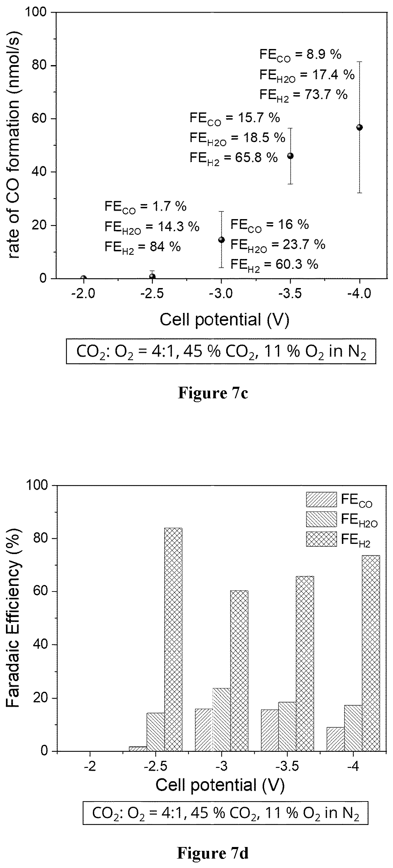

Figure 7 (Fig. 7) shows the rate of CO formation at different cell potentials which are step-changed over time for a 45% CO₂ / 55% N₂ stream (Fig. 7a) and for a 45% CO₂ / 44% N₂ / 11% O₂ stream (Fig. 7b); the rate of CO formation and faradaic efficiency of CO₂RR reaction products for a 45% CO₂ / 55% N₂ stream at different cell potentials (Fig. 7c); and the faradaic efficiency for each product over the different cell potentials for a 45% CO₂ / 44% N₂ / 11% O₂ stream (Fig. 7d).

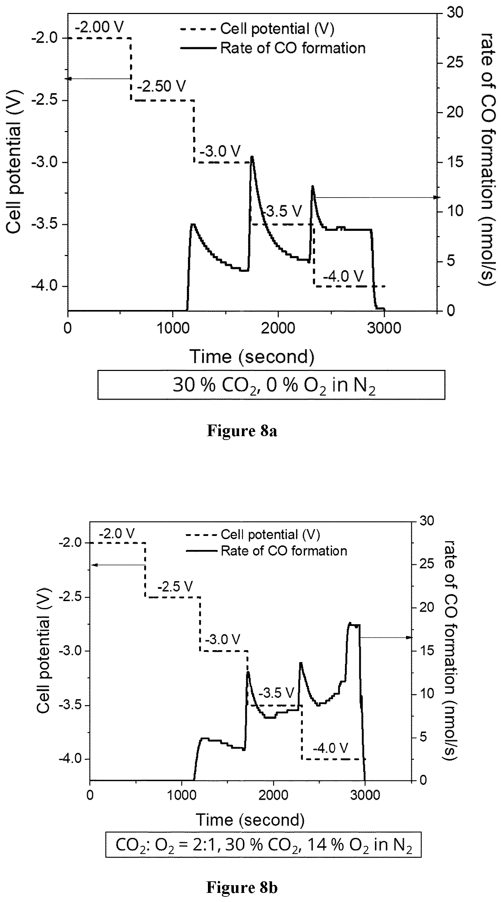

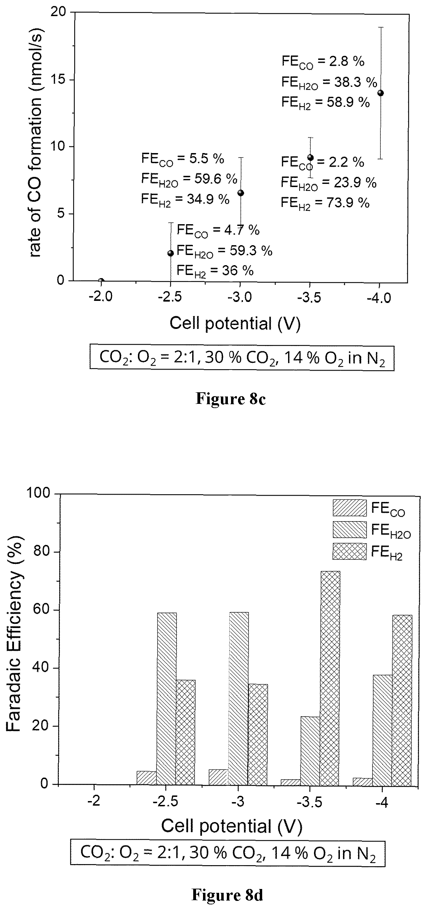

Figure 8 (Fig. 8) shows the rate of CO formation at different cell potentials which are step-changed over time for a 30% CO₂ / 70% N₂ stream (Fig. 8a) and for a 45% CO₂ / 41% N₂ / 14% O₂ stream (Fig. 8b); the rate of CO formation and faradaic efficiency of CO₂RR reaction products for a 45% CO₂ / 41% N₂ / 14% O₂ stream at different cell potentials (Fig. 8c); and the faradaic efficiency for each product over the different cell potentials for a 45% CO₂ / 41% N₂ / 14% O₂ stream (Fig. 8d).

### Detailed Description of the Invention

The present invention relates to a device that comprises two membrane reactors connected with each other. The reactors can be placed in various configurations, for example but not restricted to, side-by-side or one on top of the other. In a preferred embodiment, the reactors are placed one on top of the other.

Among advantages one or more of which may be observed with respect to known carbon dioxide capture devices, the present invention may be seen as providing;
1) an easy-to-implement, stand-alone device ; and/or
2) a new method for the capture, concentration and conversion of CO₂ from ambient air or liquid (for example CO₂ present in seawater in the form of sodium bicarbonate).

The present invention provides a new mechanism to transfer the CO₂ from the sorbent to the collector via continuous oxygen reduction / oxidation cycles. (Photo)electrochemical CO₂ sorption has been so far restricted to ionic liquids and redox mediators are generally expensive, exotic materials. The present invention provides a mechanism for a simple, solid-state device design which captures CO₂ and produces electricity simultaneously - incentivizing its use. Additionally, an electrochemical method to convert CO₂ by electroreduction is proposed. The present invention envisages:
i. The use of oxygen reduction and oxygen evolution and carbon dioxide evolution reaction cycles to create a bias free current as a way to drive CO₃²⁻ or HCO₃⁻ ions through the anion exchange membrane of the first reactor.
ii. The use of alkaline anolyte in contact with the anion exchange layer of a bipolar membrane (BPM) to dissociate water into OH- and H+ ions that, upon renewable energy input, can lead to oxygen evolution reaction (OER) in the (photo)anode and carbon dioxide reduction reaction CO₂RR in the (photo)cathode.
iii. The use of solar energy to power the reactions (but the device of the present invention, and in particular the second reactor, could also be powered or supported by an external power source, preferably an integrated photovoltaic or external renewable power source).

The function of the first reactor is to remove the CO₂ from the atmosphere - this can be ideally directly from the ambient air or alternatively from a concentrated solution such as KHCO₃ solutions or solutions of other carbonate and/or bicarbonate ions, or seawater. In effect, in this alternative embodiment, efforts to capture CO₂ in liquid solutions e.g. via KOH → KHCO₃ conversion, may be combined with the system integrated in the present invention in order to subtract CO₂ from KHCO₃ and concentrate in particular at the side of the fluid outlet of the photoanode of the first reactor (117).

The first reactor comprises an anion exchange membrane placed between a porous (photo)anode and a porous (photo)cathode. The (photo)anode contains or is connected (physically or electrically) to oxygen evolution and/or carbon dioxide evolution catalyst(s), whilst the (photo)cathode contains or is connected to an oxygen reduction catalyst. This may create a bias free current, where a photocurrent is generated only by light irradiation and applied potential bias is not needed. In order to generate a photocurrent efficiently from a photoelectrode, both solar light as well as an applied potential bias may be required across the photoelectrode. The main function of this is to improve charge separation between e⁻ and h⁺. However, applying a potential adds an additional degree of complexity. In an advantageous embodiment of the present invention, the photocurrent may be generated only under light irradiation i.e. applied potential bias is not needed. The anion exchange membrane absorbs CO₂ from the atmosphere through natural or forced convection to form HCO₃⁻ ions. Forced convection may for example be carried out by using fans or a pump to force / circulate air through the device. The device can operate without the forced convection, but this is a possible embodiment to speed up the CO₂ sorption inside the anion exchange membrane. Under solar irradiation, the CO₃²⁻or HCO₃⁻ ions are forced to the other side of the device, i.e. the OER and CO₂ER fluid outlet of the photoanode of the first reactor (117), under the bias free current. The collection step may appropriately be carried out primarily during the night, but collection is also possible in parallel with the transfer step under sunlight irradiation (Fig.1). The mixture gathered on the opposite side is a mixture of CO₂ and O₂, but preferably a higher concentration of CO₂. The total overpotential losses for performing oxygen evolution and oxygen reduction are around 0.7 V, giving a wide variety of materials with a suitable band-gap to be potential photoelectrodes (Fig.2).

In the present invention, appropriate materials for the porous (photo)anode (113, 213, 313, 413) of the first reactor (1) containing an anion exchange membrane (AEM) (112, 212, 312, 412) are n-type or p-type (photo)electrode materials compatible with anion exchange membrane (AEM) with a suitable band-gap (according to Fig. 2). Examples include BiVO₄, TiO₂, WO₃, which can be combined with a (photo)cathode to reach both OER / CO₂ER and ORR potentials. TiO₂ is a practical example for device preparation, but the bandgap of TiO₂ is large, essentially restricting absorption to that of UV light. Materials with a smaller band-gap where the conduction band (CB) and valence band (VB) are on either side of the OER / CO₂ER and ORR reaction potentials are advantageous. A smaller bandgap would enable higher absorption of visible light which allows considerably more energy to be used in practical applications. Materials with the band gap of around 1.0 to 2.0 eV and a conduction band edge lower than around 0.7 eV vs. NHE and valence band at higher than around 1.7 eV vs. NHE are appropriate, NHE (= Normal Hydrogen Electrode) here being a reference electrode and the potential of platinum in a 1 M acid solution (pH = 0). Preferred materials for the porous (photo)anode of the first reactor (1) may be selected from the group consisting of: BiVO₄, TaOₓN_{y} with x and y ranging from 0 and 2, LaTiO₂N, BaTaO₂N, SrTaO₂N, WO₃, CuWO₄, Fe₂O₃, ZnFe₂O₄, TiO₂. A particularly preferred list consists of: BiVO₄, TiO₂, WO₃. Protective layers or cocatalysts (catalysts on photoelectrodes, the materials may be the same) may enhance performance and / or provide chemical compatibility to the alkaline environment. OER/CO₂ER (co)catalyst materials for the porous (photo)anode (113, 213, 313, 413) of the first reactor (1) may appropriately include catalysts based on one or more of: (A) OER: Ni, Ni Raney, NiCo, NiFe, NiP, CoP, CuCo; CoPi, SrCo, Ir, Ru, Mg, Ag, Au; (B) CO₂ER: Ni, Ni Raney, LaNi, LaMn, Ag, Ru, Au, Pt, Pt₃M where M = Ni, Co, Y, PtRu, Co, NiP, CoP, FeP, NiCo, NiMo, NiW, and their oxides for all metals in the list. For the CO₂ER, these materials can either be alone or supported, for example on carbon, in particular in combination with binders (e.g. PTFE) and ionomers. Protection can be provided by overcoatings e.g. of TiO₂. Furthermore, in the case of the use of TiO₂ as materials for the porous (photo)anode, a co-catalyst is not necessary - the TiO₂ is self-catalysing.

In the present invention, appropriate materials for the porous (photo)anode (123, 223, 333, 423) of the second reactor (2) containing a bipolar membrane (BPM) (122, 222, 322, 422) are similar, although not identical, to the materials described above for the porous (photo)anode of the first reactor.

Preferred materials for the porous (photo)anode of the second reactor (2) may thus be photoanodes selected from the group consisting of: BiVO₄, TaOₓN_{y}, with x and y ranging from 0 to 2, LaTiO₂N, BaTaO₂N, CuWO₄, WO₃, TiO₂. Protective layers or cocatalysts (catalysts on photoelectrodes, the materials may be the same) may enhance performance and / or provide chemical compatibility to the alkaline environment. OER (co)catalyst materials for the porous (photo)anode (123, 223, 333, 423) of the second reactor (2) may appropriately include catalysts based on one or more of Ni, NiOOH, Ni Raney, Co, CoOOH, Co₂O₃, NiCo₂O₄, NiFe₂O₄, Ni₂P, FePₓ, CoPₓ, Cu_{0.5}Co_{2.5}O₄; CoPi, SrCoO₃, LaMnO₃, LaFeO₃, IrO₂, RuO₂, MgOₓ, and/or AgOₓ, with x ranging from 0 to 2. These materials can either be alone or supported, for example on carbon, in particular in combination with binders (e.g. PTFE) and ionomers. Protection can be provided by overcoatings e.g. of TiO₂. Furthermore, in the case of the use of TiO₂ as materials for the porous (photo)anode, a co-catalyst is not necessary - the TiO₂ is self-catalysing.

In the present invention, appropriate materials for the porous (photo)cathode (111, 211, 311, 411) of the first reactor (1) containing an anion exchange membrane (AEM) (112, 212, 312, 412) are generally speaking p-type (photo)electrode materials compatible with alkaline exchange membranes with a suitable band-gap and edges (according to Fig. 2). Materials with the band gap of around 1.0 to 2.0 eV and a conduction band edge lower than around 0.7 eV vs. NHE and valence band at higher than around 1.7 eV vs. NHE are appropriate. Preferred materials for the porous (photo)cathode of the first reactor (1) may be selected from the group consisting of: Si, MoS₂, MoSe₂, WS₂, GaP, CdS, CdSe, ZnSe, CuNbO₄, PMPDI, InP, WSe₂, ZnFe₂O₄, CuNbO₃, PMPDI, Cu₂O, g-C₃N₄, CIGS, CIGSe, CaFeO₂, and/or CuFeO₂. Protective layers or cocatalysts may enhance performance. ORR (co)catalyst materials for the porous (photo)cathode (111, 211, 311, 411) of the first reactor (1) may appropriately include catalysts based on: Ni, Ni Raney, LaNiO₃, LaMnO₃, Ag, Ru, Au, Pt, Pt₃M where M = Ni, Co, Y, PtRu, Co, NiPₓ, CoPₓ, FePₓ, NiFe, NiCo, NiMo, NiW, Ir, NiCo₂Pₓ, Mg, Ru, Pt, Rh, and/or Pd, with x ranging from 0 to 2. Protection and or providing chemical compatibility with the alkaline environment can be provided by overcoatings e.g. of TiO₂. These materials can either be alone or supported, for example on carbon, in combination with binders (e.g. PTFE) and ionomers.

In the present invention, appropriate materials for the porous cathode (121, 221, 321, 421) of the second reactor (2) containing a bipolar membrane (BPM) (122, 222, 322, 422) are CO₂RR catalysts dependant on the product of interest. Preferred materials for the porous cathode of the second reactor (2) may include: In, Sn, Cd, Pd, Hg, or their mixtures, for the CO₂RR to HCOOH(aq.); Ag, Au, Zn or their mixtures, for the CO₂RR to CO; Cu supported on N-doped carbon, for the CO₂RR to CH₄(g); Cu with Nafion^{®} overlayer for the CO₂RR to CH₃OH(aq.); Cu covered with N-aryl-substituted tetrahydro-4,4'-bipyridine organic thin film, for the CO₂RR to C₂H₄; Cu alloys, CuSn or CuAg alloys, Cu supported on carbon synthesized by an amalgamated Cu-Li method, for the CO₂RR to C₂H₅OH(aq.). They may be present alone or supported, for example on carbon (e.g. cloth or paper) in combination with binders (e.g. PTFE) and ionomers.

In the present invention, the anion exchange membrane (AEM) (112, 212, 312, 412) for the first reactor can appropriately be: anion exchange membrane materials containing quaternary ammonium groups (such as those sold under the commercial names: Fumasep^{®} FAA, A201, Orion^{®} TM1, Durion^{®}, Selemion^{®}) or low density polyurethane with quaternary ammonium groups; anion exchange membrane materials containing imidazolium or polybenzimidazole groups (such as those sold under the commercial names: Aemion^{®}, Sustainion^{®}), PiperION^{®} (based on poly(aryl piperidinium)); tri-or di-amine cross-linked quaternized polysulfones; or poly(aryl piperidinium). Preferred anion exchange membrane materials are ones containing quaternary ammonium groups, low density polyurethane with quaternary ammonium groups, or anion exchange membrane containing imidazolium or polybenzimidazole groups. A particularly preferred choice is the use of anion exchange membranes based on materials with vinylbenzyl chloride and imidazolium groups (such as those sold under the commercial name: Sustainion^{®}). Low-density polyethylene (LDPE) including grafted LDPE is another preferred embodiment of the anion exchange membrane (AEM) in the present invention.

According to the invention, a bipolar membrane (BPM) is an ion-exchange membrane constituted by a cation exchange layer and an anion exchange layer, which allows the generation of protons and hydroxide ions via a water dissociation mechanism (R.Pärnamäe et al., ScienceDirect, Journal of Membrane Science, Vol. 617, 2021, 118538). The bipolar membrane (BPM) of the invention allows to have a different environment on either side of the membrane, i.e. acidic on the cathode side (favouring CO₂RR) and alkaline on the anode side (favouring OER). The bipolar membrane (BPM) (122, 222, 322, 422) for the second reactor comprises a cation exchange layer and an anion exchange layer,
wherein the cation exchange layer may comprise a material selected from the group consisting of: perfluorocarbonsulfonic acid polymers, polysulfonic acid polymers, carboxylic acid polymers, phosphonic acid polymers, polybenzimidazoles, polyacrylic acids, hydrocarbon-based membrane materials (such as sulfonated polyphenylene), poly(p-phenylene oxide), sodium alginate, modified chitosan (such as N-methylenephosphonic chitosan (PC) and quaternized chitosan (QC)), polyvinyl chloride, and polyether ether ketone, and preferably perfluorocarbonsulfonic acid polymers and polysulfonic acid polymers, and
wherein the anion exchange layer comprises a material selected from the group consisting of: quaternary ammonium groups, tertiary amine groups, polystyrene with grafted secondary amine groups, polysulfone, poly(ethersulfone), poly(vinylidene fluoride) (PVDF), and preferably quaternary ammonium groups, tertiary amine groups, polystyrene with grafted secondary amine groups.

In the present invention, the porous (photo)anode and/or porous (photo)cathode of either the first or second reactor may be ionomer coated, which may help to increase CO₂ sorption capacity. The ionomers used for such a coating may notably include ionomer materials mentioned above for use as anion exchange membrane (AEM) or components of the bipolar membrane (BPM). In the first reactor, with AEM, the loading of ionomer coating is preferably at most 50 mg / cm², more preferably 0.5 to 10 mg / cm². In the second reactor, with BPM, the loading of ionomer coating is preferably at most 50 mg / cm², more preferably 0.5 to 10 mg / cm², still more preferably 1.0 to 5.0 mg / cm², for example about 3.0 mg / cm². The ionomer coating is not necessary to carry out the present invention, and an ionomer coating of the porous (photo)anode and/or porous (photo)cathode of, for example, the second reactor does not necessitate an ionomer coating of the porous (photo)anode and/or porous (photo)cathode of the other, for example the first reactor. Further, the ionomers do not need to be the same on the (photo)anode and (photo)cathode side of the first reactor, but this option is envisaged for the practice of the invention. In the second reactor, both sides of the bipolar membrane (BPM), and in particular the side of the bipolar membrane (BPM) which is exposed may be coated by an ionomer coating.

The present invention provides what may be a fully free-standing device. Thus the bicarbonate and carbonate anions (HCO₃⁻ or CO₃²⁻) as shown in Figure 1 may be generated in the absence of any liquid, with the cathode and anode inlets all gaseous. It may be noted here, that for most ion exchange membrane materials, like polysulfonic acid materials including those sold under the name Nafion^{®}, the membrane itself is hygroscopic. Therefore there is in practice H₂O inside of the membrane which allows the flow of HCO₃⁻ or CO₃²⁻. However, there may be no fully "liquid" water, and the membrane still retains a plastic-like / polymer structure when it is hydrated. In appropriate field use of the device of the invention, the water for the hydration may come from ambient humidity. Additional liquid water may however be needed in very dry conditions (low relative humidity, deserts).

The function of the second reactor is to convert any remaining O₂ in the CO₂ / O₂ mixture, which is transferred into the second reactor via piping. The second reactor comprises a bipolar membrane placed between a porous (photo)anode and a porous (photo)cathode. The (photo)anode is connected (physically or electrically) to an oxygen evolution catalyst, whilst the (photo)cathode is connected to an oxygen reduction catalyst (Fig. 3). The resulting mixture of CO₂ electroconversion products can be stored / used for other applications. The second reactor may be powered by the use of wind or photovoltaics in series or multijunctions (Si or an alloy containing elements from groups III (B, Al, Ga, In) and V (N, P, As, Sb) of the periodic table (for example GaAs, InSb, InN, GaP, GaInP, GaAIN) or perovskites based ones), in order to reach operational voltage of 2.0-3.5 V.

There is potential for the capture and conversion functions to be combined into one device, for example, the two configurations shown in Fig. 4.

Thus in a device for which an exemplary embodiment is illustrated in Figure 4a, the present invention provides a carbon dioxide capture device wherein:
- the porous (photo)cathode of the first reactor has a fluid inlet and a fluid outlet both able to carry carbon dioxide in air and water, possibly with dissolved species, such as seawater, and the porous (photo)anode of the first reactor has a fluid inlet and a fluid outlet both able to carry water, possibly with dissolved water, and oxygen;
- the porous cathode of the second reactor has a fluid inlet and a fluid outlet able both to carry organic reaction products resulting from carbon dioxide reduction reaction , and the porous (photo)anode of the second reactor has a fluid inlet and a fluid outlet both able to carry water and oxygen,
wherein the fluid outlet of the porous (photo)cathode of the first reactor is fluidically connected to the fluid inlet of the porous (photo)anode of the second reactor, and the fluid outlet of the porous (photo)anode of the first reactor is fluidically connected to the fluid inlet of the porous cathode of the second reactor.

The porous cathode of the second reactor has a fluid inlet that may introduce an alkaline anolyte to maintain an alkaline environment on one side of the bipolar membrane (BPM).

Thus in a device for which an exemplary embodiment is illustrated in Figure 4b, the present invention provides a carbon dioxide capture device wherein:
the first and second reactor are placed in a consolidated block separated by a separator such that the porous (photo)cathode of the first reactor is situated opposite the porous (photo)anode of the second reactor and separated therefrom by the separator, and the porous (photo)anode of the first reactor is opposite the porous cathode of the second reactor and separated therefrom by the separator, and a single fluid line including the fluid inlet of the porous(photo)cathode of the first reactor and the fluid outlet of the porous photoanode of the second reactor runs along one wall of the consolidated block, and a further single fluid line including the fluid inlet of the porous (photo)anode of the first reactor and the fluid outlet of the porous cathode of the second reactor runs along another wall of the consolidated block, the two walls facing one another and both being in contact with the separator.

The hashed border region in the middle of Figure 4b is a frame / space to separate reactor 1 and 2 (first and second reactors). The essential function of the hashed border region is to avoid contact between the two reactors.

### Example

In an appropriate method for using the carbon dioxide capture device of the present invention, firstly, during the night, the anion exchange membrane was allowed to absorb CO₂. This type of membrane absorbs around 95% of its CO₂ capacity after 15 hours (Fig. 5), making it ideal for day - night cycling with the solar light.

The light irradiation was then begun to concentrate the CO₂. This generates charge (photocurrent - I (mA) - Fig. 6) which pushes the ions across the anion exchange membrane (Fig. 1). The gases collected on the opposite side of the first reactor (Fig. 6) are at a ratio of approx. 4:1 O₂:CO₂ (in comparison, ambient air is 2000:1 O₂:CO₂). As the gases collected, CO₂ is obtained in the fluid output, as shown at the bottom right of Fig. 1 as part of the gaseous mixture H₂O, O₂, and CO₂.

**Table 1**

| | I (mA) | OER (ppm) | CO₂ER (ppm) | Selectivity to CO₂ |
|---|---|---|---|---|
| Experiment | 3 | 630 | 170 | 27% |
| Theory | 3 | 560 | 1120 | (35%) |

OER here is a reference to a type of reaction (oxygen evolution reaction) and CO₂ER refers to the CO₂ evolution reaction. OER (ppm) refers to the levels of oxygen in the fluid outlet (117, 217) of the first reactor and CO₂ER (ppm) to the levels of CO₂ in the fluid outlet (117, 217) side of the first reactor.

The carbon dioxide capture and separation in a (OH⁻)-PEC cell was carried out here with:
- Inlet-Cathode: 400 ppm CO₂ + 3% H₂O in He;
- Inlet-Anode: > 3% H₂O in He;
- Electrolyte: grafted LDPE anion exchange membrane. Here, LDPE is low-density polyethylene, and the "electrolyte" is the anion exchange membrane (AEM);
- Photoanode: TiO₂/Ti-felt (substrate);
- Cathode: Pt/C;
- UV lamp: 7 mW cm⁻² intensity;
- Pre-treatment in CO₂: overnight.

Here "(AEM)-PEC cell" refers to the first reactor, containing a anion exchange membrane (AEM). The PEC stands for "photoelectrochemical". The second reactor is the (PBM)-PEC cell, containing a bipolar membrane.

Different cathodes have been tested for the oxygen reduction reaction / CO₂ER. Pt / Ru, Au and Ni. Pt / Ru and Pt have given promising results and are considered among the preferred choices.

The next step is the conversion from CO₂ in the presence of O₂ to CO₂ electroreduction productions through the bipolar membrane, again through the carbon dioxide reduction reaction and oxygen evolution reaction (Fig. 3). The reaction was started when electricity is provided to the device to generate charge carriers, which push the ions through the bipolar membrane. The electricity can be provided by a photovoltaic cell (PV) in the preferred configuration for a free-standing device. Or can be provided by an external electricity source, preferably a renewable source.

The oxygen purification in a BPM cell was carried out here with:
- Catholyte: 50 sccm of gas mixture (CO₂, CO₂+N₂, CO₂+Air);
- Anolyte: 1 M KOH pH = 13.6, recirculation rate 10 sccm;
- Membrane: Fumasep^{®} bipolar membrane (BPM);
- Anode: Ag/C with PTFE coating;
- Cathode: Pt/C;
- UV lamp: 7 mW cm⁻².

The data shows CO₂ conversion to CO in faradaic efficiencies 8.3% for 100% CO₂ (Fig. 6), 15.7% for the CO₂/O₂ ratio in the second reactor inlet 4/1 (Fig. 7), and 5.5% for the CO₂/O₂ ratio in the second reactor inlet 2/1 (Fig. 8).

### Summary of Reference Numerals

1: First reactor
111, 211, 311, 411: (Photo)cathode of first reactor
112, 212, 312, 412: Anion Exchange Membrane (AEM) of first reactor
113, 213, 313, 413: Photoanode of first reactor
114, 214, 314, 414: Fluid inlet of (photo)cathode of first reactor
115, 215, 315, 415: Fluid inlet of photoanode of first reactor
116, 216: Fluid outlet of (photo)cathode of first reactor
117, 217: Fluid outlet of photoanode of first reactor
2: Second reactor
121, 221, 321, 421: Cathode of second reactor
122, 222, 322, 422: Bipolar Membrane (BPM) of second reactor
123, 223, 323, 423: Anode of second reactor
124, 224: Fluid inlet of cathode of second reactor
125, 225: Fluid inlet of anode of second reactor
126, 226, 326, 426: Fluid outlet of cathode of second reactor
127, 227, 327, 427: Fluid outlet of anode of second reactor
330, 430: Separator for consolidated block assembly of first and second reactors

## Claims

1. Carbon dioxide capture and conversion device comprising:
(A) a first reactor comprising an anion exchange membrane placed between a porous anode and a porous cathode, wherein the anode contains or is connected physically or electrically to oxygen evolution and carbon dioxide evolution catalyst(s), and the cathode contains or is connected physically or electrically to an oxygen reduction catalyst, wherein the anode of the first reactor is preferably a photoanode and/or the cathode of the first reactor is preferably a photocathode;
(B) a second reactor comprising a bipolar membrane placed between a porous anode and porous cathode, wherein the anode contains or is connected physically or electrically to an oxygen evolution catalyst, and the cathode contains or is connected physically or electrically to a carbon dioxide reduction catalyst, wherein the anode of the second reactor is preferably a photoanode;
wherein at least one of the anode and cathode for both first and second reactors is a photoanode or a photocathode,
wherein the porous cathode of the first reactor has at least a fluid inlet able to carry carbon dioxide, air and water, possibly with dissolved species, and the porous anode of the first reactor has at least a fluid inlet able to carry water, possibly with dissolved species, and oxygen,
the porous cathode of the second reactor has at least a fluid outlet able to carry organic reaction products resulting from carbon dioxide reduction reaction, and the porous anode of the second reactor has at least a fluid outlet able to carry water, possibly with dissolved species, and oxygen,
wherein the carbon dioxide capture device is configured to transfer fluid exiting the porous cathode of the first reactor to the porous anode of the second reactor, and to transfer fluid exiting the porous anode of the first reactor to the porous cathode of the second reactor.

2. Carbon dioxide capture and conversion device according to claim 1, wherein:
- the porous cathode of the first reactor has a fluid inlet and a fluid outlet both able to carry carbon dioxide, air and water, possibly with dissolved species, and the porous anode of the first reactor has a fluid inlet and a fluid outlet both able to carry water, possibly with dissolved species, and oxygen;
- the porous cathode of the second reactor has a fluid inlet and a fluid outlet able both to carry organic reaction products resulting from carbon dioxide reduction reaction, and the porous anode of the second reactor has a fluid inlet and a fluid outlet both able to carry water, possibly with dissolved species, and oxygen,
wherein the fluid outlet of the porous cathode of the first reactor is fluidically connected to the fluid inlet of the porous anode of the second reactor, and the fluid outlet of the porous anode of the first reactor is fluidically connected to the fluid inlet of the porous cathode of the second reactor.

3. Carbon dioxide capture and conversion device according to claim 1, wherein the first and second reactor are placed in a consolidated block separated by a separator such that the porous cathode of the first reactor is situated opposite the porous anode of the second reactor and separated therefrom by the separator, and the porous anode of the first reactor is opposite the porous cathode of the second reactor and separated therefrom by the separator, and a single fluid line including the fluid inlet of the porous cathode of the first reactor and the fluid outlet of the porous anode of the second reactor runs along one wall of the consolidated block, and a further single fluid line including the fluid inlet of the porous anode of the first reactor and the fluid outlet of the porous cathode of the second reactor runs along another wall of the consolidated block, the two walls facing one another and both being in contact with the separator.

4. Carbon dioxide capture and conversion device according to any of claims 1 to 3, wherein the porous anode of the first reactor comprises one or more of Ni, NiOₓ, Co₂O₃, NiCo₂O₄, NiFe₂O₄, Cu_{0.5}Co_{2.5}O₄, CoPi, SrCoO₃, IrOₓ, RuOₓ, and/or PtOₓ, with x ranging from 0 and 2, preferably the anode of the first reactor is a photoanode comprising BiVO₄, TaOₓN_{y} with x and y ranging from 0 and 2, LaTiO₂N, BaTaO₂N, SrTaO₂N, WO₃, CuWO₄, Fe₂O₃, ZnFe₂O₄, and/or TiO₂, and more preferably BiVO₄, TiO₂, WO₃, and may further include (co)catalyst materials based on one or more of: Ni, Ni Raney, NiCo, NiFe, NiP, CoP, CuCo, CoPi, SrCo, Ir, Ru, Mg, Ag, Au, LaNi, LaMn, Ag, Ru, Au, Pt, Pt₃M where M = Ni, Co, Y, PtRu, Co, NiP, CoP, FeP, NiCo, NiMo, NiW, and their metallic oxides.

5. Carbon dioxide capture device according to any of claims 1 to 4, wherein the porous anode of the second reactor comprises one or more of Ni, NiOₓ, Co₂O₃, NiCo₂O₄, NiFe₂O₄, Cu_{0.5}Co_{2.5}O₄, CoPi, SrCoO₃, IrOₓ, RuOₓ, and/or PtOₓ, with x ranging from 0 and 2, and preferably the anode of the first reactor is a photoanode comprising BiVO₄, TaOₓN_{y}, with x and y ranging from 0 to 2, LaTiO₂N, BaTaO₂N, CuWO₄, WO₃, and/or TiO₂..

6. Carbon dioxide capture and conversion device according to any of claims 1 to 5, wherein the porous cathode of the first reactor comprises one or more of Pt/C, Pt-Ru/C, Au/C, Ni/C and Ni-felt, preferably Pt, Pt-Ru/C, and more preferably the cathode is a photocathode comprising: Si, MoS₂, MoSe₂, WS₂, GaP, CdS, CdSe, ZnSe, CuNbO₄, PMPDI, InP, WSe₂, ZnFe₂O₄, CuNbO₃, PMPDI, Cu₂O, g-C₃N₄, CIGS, CIGSe, CaFeO₂, and/or CuFeO₂, and may further include (co)catalyst materials based on one or more of: Ni, Ni Raney, LaNiO₃, LaMnO₃, Ag, Ru, Au, Pt, Pt₃M where M = Ni or Co or Y, PtRu, Co, NiPₓ, CoPₓ, FePₓ, NiCo, NiMo, NiW, Ir, NiCO₂Pₓ, Mg, Ru, Pt, Rh, and/or RhOₓ, with x ranging from 0 to 2.

7. Carbon dioxide capture and conversion device according to any of claims 1 to 6, wherein the porous cathode of the second reactor comprises one or more of: In, Sn, Cd, Pd, Hg, Ag, Au, Zn, Cu supported on N-doped carbon, Cu covered with N-aryl-substituted tetrahydro-4,4'-bipyridine organic thin film, Cu alloys, CuSn or CuAg alloys, Cu supported on carbon synthesized by an amalgamated Cu-Li method.

8. Carbon dioxide capture and conversion device according to any of claims 1 to 7, wherein the porous anode of the first and/or second reactor and/or the porous cathode of the first and/or second reactor, comprise(s) porous substrates, such as those in mesh, felt or foam form, the porous substrates comprising a material selected from the group consisting of: carbon; titanium; tungsten; stainless steel; nickel; and conducting oxides.

9. Carbon dioxide capture and conversion device according to any of claims 1 to 8, wherein the anion exchange membrane of the first reactor comprises a material selected from the group consisting of: materials containing quaternary ammonium groups; low density polyurethane with quaternary ammonium groups; materials containing imidazolium or polybenzimidazole groups; tri-or di-amine cross-linked quaternized polysulfones; and poly(aryl piperidinium).

10. Carbon dioxide capture and conversion device according to claim 9, wherein the anion exchange membrane of the first reactor comprises a material with vinylbenzyl chloride and imidazolium groups.

11. Carbon dioxide capture and conversion device according to claims 1 to 10 wherein the bipolar membrane of the second reactor comprises a cation exchange layer and an anion exchange layer,
wherein the cation exchange layer comprises a material selected from the group consisting of: perfluorocarbonsulfonic acid polymers, polysulfonic acid polymers, carboxylic acid polymers, phosphonic acid polymers, polybenzimidazoles, polyacrylic acids, hydrocarbon membrane materials, poly(p-phenylene oxide), sodium alginate, modified chitosan, polyvinyl chloride, and polyether ether ketone, and
wherein the anion exchange layer comprises a material selected from the group consisting of: quaternary ammonium groups, tertiary amine groups, secondary amine groups on a polystyrene, polysulfone, poly(ethersulfone), poly(vinylidene fluoride) (PVDF).

12. Carbon dioxide capture and conversion device according to claim 11 wherein the bipolar membrane of the second reactor comprises a cation exchange layer and an anion exchange layer,
wherein the cation exchange layer comprises a material selected from the group consisting of: perfluorocarbonsulfonic acid polymers and polysulfonic acid polymers, and
wherein the anion exchange layer comprises a material selected from the group consisting of: quaternary ammonium groups, tertiary amine groups, secondary amine groups on a polystyrene, polysulfone, poly(ethersulfone), poly(vinylidene fluoride) (PVDF).

## Patentansprüche

1. Kohlendioxid-Erfassungs- und Umwandlungsvorrichtung, umfassend:
(A) einen ersten Reaktor, umfassend eine Anionenaustauschermembran, die zwischen einer porösen Anode und einer porösen Kathode platziert ist, wobei die Anode einen oder mehrere Katalysatoren für die Sauerstoff- und Kohlendioxidentwicklung enthält oder physisch oder elektrisch damit verbunden ist und die Kathode einen Sauerstoffreduktionskatalysator enthält oder physisch oder elektrisch damit verbunden ist, wobei die Anode des ersten Reaktors vorzugsweise eine Photoanode ist und/oder die Kathode des ersten Reaktors vorzugsweise eine Photokathode ist;
(B) einen zweiten Reaktor, umfassend eine bipolare Membran, die zwischen einer porösen Anode und einer porösen Kathode platziert ist, wobei die Anode einen Sauerstoffentwicklungskatalysator enthält oder physisch oder elektrisch damit verbunden ist und die Kathode einen Kohlendioxidreduktionskatalysator enthält oder physisch oder elektrisch damit verbunden ist, wobei die Anode des zweiten Reaktors vorzugsweise eine Photoanode ist;
wobei mindestens eine von der Anode und der Kathode sowohl für den ersten als auch für den zweiten Reaktor eine Photoanode oder eine Photokathode ist,
wobei die poröse Kathode des ersten Reaktors mindestens einen Fluideinlass aufweist, der in der Lage ist, Kohlendioxid, Luft und Wasser, eventuell mit gelösten Spezies, zu transportieren, und die poröse Anode des ersten Reaktors mindestens einen Fluideinlass aufweist, der in der Lage ist, Wasser, eventuell mit gelösten Stoffen, und Sauerstoff zu transportieren,
die poröse Kathode des zweiten Reaktors mindestens einen Fluidauslass aufweist, der in der Lage ist, organische Reaktionsprodukte aus der Kohlendioxidreduktionsreaktion zu transportieren, und die poröse Anode des zweiten Reaktors mindestens einen Fluidauslass aufweist, der in der Lage ist, Wasser, eventuell mit gelösten Stoffen, und Sauerstoff zu transportieren,
wobei die Kohlendioxiderfassungsvorrichtung konfiguriert ist, um Fluid, das aus der porösen Kathode des ersten Reaktors austritt, zu der porösen Anode des zweiten Reaktors zu leiten, und Fluid, das aus der porösen Anode des ersten Reaktors austritt, zu der porösen Kathode des zweiten Reaktors zu leiten.

2. Kohlendioxid-Erfassungs- und Umwandlungsvorrichtung nach Anspruch 1, wobei:
- die poröse Kathode des ersten Reaktors einen Fluideinlass und einen Fluidauslass aufweist, die beide in der Lage sind, Kohlendioxid, Luft und Wasser, eventuell mit gelösten Stoffen, zu transportieren, und die poröse Anode des ersten Reaktors einen Fluideinlass und einen Fluidauslass aufweist, die beide in der Lage sind, Wasser, eventuell mit gelösten Stoffen, und Sauerstoff zu transportieren;
- die poröse Kathode des zweiten Reaktors einen Fluideinlass und einen Fluidauslass aufweist, die beide in der Lage sind, organische Reaktionsprodukte, die aus der Kohlendioxidreduktionsreaktion resultieren, zu transportieren, und die poröse Anode des zweiten Reaktors einen Fluideinlass und einen Fluidauslass aufweist, die beide in der Lage sind, Wasser, eventuell mit gelösten Spezies, und Sauerstoff zu transportieren,
wobei der Fluidauslass der porösen Kathode des ersten Reaktors fluidisch mit dem Fluideinlass der porösen Anode des zweiten Reaktors verbunden ist und der Fluidauslass der porösen Anode des ersten Reaktors fluidisch mit dem Fluideinlass der porösen Kathode des zweiten Reaktors verbunden ist.

3. Kohlendioxid-Erfassungs- und Umwandlungsvorrichtung nach Anspruch 1, wobei der erste und der zweite Reaktor in einem konsolidierten Block platziert sind, der durch einen Separator getrennt ist, sodass sich die poröse Kathode des ersten Reaktors gegenüber der porösen Anode des zweiten Reaktors befindet und davon durch den Separator getrennt ist, und die poröse Anode des ersten Reaktors gegenüber der porösen Kathode des zweiten Reaktors ist und davon durch den Separator getrennt ist, und eine einzige Fluidleitung, die den Fluideinlass der porösen Kathode des ersten Reaktors und den Fluidauslass der porösen Anode des zweiten Reaktors beinhaltet, und die entlang einer Wand des konsolidierten Blocks verläuft, und eine weitere einzelne Fluidleitung, die den Fluideinlass der porösen Anode des ersten Reaktors und den Fluidauslass der porösen Kathode des zweiten Reaktors beinhaltet, und die entlang einer anderen Wand des konsolidierten Blocks, wobei die zwei Wände einander zugewandt sind und beide in Kontakt mit dem Separator sind.

4. Kohlendioxid-Erfassungs- und Umwandlungsvorrichtung nach einem der Ansprüche 1 bis 3,
wobei die poröse Anode des ersten Reaktors eines oder mehrere von Ni, NiOₓ, Co₂O₃, NiCO₂O₄, NiFe₂O₄, Cu_{0.5}Co_{2.5}O₄, CoPi, SrCoO₃, IrOₓ, RuOₓ und/oder PtOₓ umfasst, wobei x in einem Bereich von 0 und 2 ist, vorzugsweise die Anode des ersten Reaktors eine Photoanode ist, umfassend BiVO₄, TaOₓN_{y}, wobei x und y in einem Bereich von 0 und 2 sind, LaTiO₂N, BaTaO₂N, SrTaO₂N, WO₃, CuWO₄, Fe₂O₃, ZnFe₂O₄ und/oder TiO₂, und bevorzugter BiVO₄, TiO₂, WO₃, und kann ferner (Ko)katalystmaterialien basierend auf einem oder mehreren von Folgenden beinhalten: Ni, Ni Raney, NiCo, NiFe, NiP, CoP, CuCo, CoPi, SrCo, Ir, Ru, Mg, Ag, Au, LaNi, LaMn, Ag, Ru, Au, Pt, Pt₃M wobei M = Ni, Co, Y, PtRu, Co, NiP, CoP, FeP, NiCo, NiMo, NiW und ihre Metalloxide.

5. Kohlendioxid-Erfassungsvorrichtung nach einem der Ansprüche 1 bis 4, wobei die poröse Anode des zweiten Reaktors eines oder mehrere von Ni, NiOₓ, Co₂O₃, NiCO₂O₄, NiFe₂O₄, Cu_{0.5}Co_{2.5}O₄, CoPi, SrCoO₃, IrOₓ, RuOₓ und/oder PtOₓ umfasst, wobei x in einem Bereich von 0 und 2 ist, und vorzugsweise die Anode des ersten Reaktors eine Photoanode ist, umfassend BiVO₄, TaOₓN_{y}, wobei x und y in einem Bereich von 0 bis 2 sind, LaTiO₂N, BaTaO₂N, CuWO₄, WO₃ und/oder TiO₂.

6. Kohlendioxid-Erfassungs- und Umwandlungsvorrichtung nach einem der Ansprüche 1 bis 5, wobei die poröse Kathode des ersten Reaktors eines oder mehrere von Pt/C, Pt-Ru/C, Au/C, Ni/C und Ni-Filz, vorzugsweise Pt, Pt-Ru/C, umfasst und die Kathode vorzugsweise eine Photokathode ist, umfassend: Si, MoS₂, MoSe₂, WS₂, GaP, CdS, CdSe, ZnSe, CuNbO₄, PMPDI, InP, WSe₂, ZnFe₂O₄, CuNbO₃, PMPDI, CuO₂, g-C₃N₄, CIGS, CIGSe, CaFeO₂ und/oder CuFeO₂, und kann ferner (Co-)Katalysatormaterialien basierend auf einem oder mehreren von Folgenden beinhalten: Ni, Ni Raney, LaNiO₃, LaMnO₃, Ag, Ru, Au, Pt, Pt₃M wobei M = Ni oder Co oder Y, PtRu, Co, NiPₓ, CoPₓ, FePₓ, NiCo, NiMo, NiW, Ir, NiCO₂Pₓ, Mg, Ru, Pt, Rh und/oder RhOₓ, wobei x in einem Bereich von 0 bis 2 ist.

7. Kohlendioxid-Erfassungs- und Umwandlungsvorrichtung nach einem der Ansprüche 1 bis 6, wobei die poröse Kathode des zweiten Reaktors eines oder mehrere von Folgenden umfasst: In, Sn, Cd, Pd, Hg, Ag, Au, Zn, Cu getragen auf N-dotiertem Kohlenstoff, Cu überzogen mit organischem Dünnfilm aus N-Aryl-substituiertem Tetrahydro-4,4'-bipyridin, Cu-Legierungen, CuSn- oder CuAg-Legierungen, Cu getragen auf Kohlenstoff, synthetisiert durch ein amalgamiertes Cu-Li-Verfahren.

8. Kohlendioxid-Erfassungs- und Umwandlungsvorrichtung nach einem der Ansprüche 1 bis 7, wobei die poröse Anode des ersten und/oder zweiten Reaktors und/oder die poröse Kathode des ersten und/oder zweiten Reaktors poröse Substrate, wie beispielsweise jene in Maschen-, Filz- oder Schaumform, umfasst, die porösen Substrate umfassend ein Material, das ausgewählt ist aus der Gruppe, bestehend aus: Kohlenstoff, Titan, Wolfram, Edelstahl, Nickel und leitenden Oxiden.

9. Kohlendioxid-Erfassungs- und Umwandlungsvorrichtung nach einem der Ansprüche 1 bis 8, wobei die Anionenaustauschmembran des ersten Reaktors ein Material umfasst, das ausgewählt ist aus der Gruppe, bestehend aus: Materialien, die quaternäre Ammoniumgruppen enthalten; Polyurethan niedriger Dichte mit quaternären Ammoniumgruppen; Materialien, die Imidazolium- oder Polybenzimidazolgruppen enthalten; tri- oder diaminvernetzte quaternisierte Polysulfone; und Poly(arylpiperidinium).

10. Kohlendioxid-Erfassungs- und Umwandlungsvorrichtung nach Anspruch 9, wobei die Anionenaustauschmembran des ersten Reaktors ein Material mit Vinylbenzylchlorid- und Imidazoliumgruppen umfasst.

11. Kohlendioxid-Erfassungs- und Umwandlungsvorrichtung nach einem der Ansprüche 1 bis 10, wobei die bipolare Membran des zweiten Reaktors eine Kationenaustauschschicht und eine Anionenaustauschschicht umfasst,
wobei die Kationenaustauschschicht ein Material umfasst, das ausgewählt ist aus der Gruppe, bestehend aus: Perfluorkohlenstoffsulfonsäurepolymeren, Polysulfonsäurepolymeren, Carbonsäurepolymeren, Phosphonsäurepolymeren, Polybenzimidazolen, Polyacrylsäuren, Kohlenwasserstoffmembranmaterialien, Poly(p-phenylenoxid), Natriumalginat, modifiziertem Chitosan, Polyvinylchlorid und Polyetheretherketon, und
wobei die Anionenaustauschschicht ein Material umfasst, das ausgewählt ist aus der Gruppe, bestehend aus: quaternären Ammoniumgruppen, tertiären Amingruppen, sekundären Amingruppen auf einem Polystyrol, Polysulfon, Poly(ethersulfon), Poly(vinylidenfluorid) (PVDF).

12. Kohlendioxid-Erfassungs- und Umwandlungsvorrichtung nach Anspruch 11, wobei die bipolare Membran des zweiten Reaktors eine Kationenaustauschschicht und eine Anionenaustauschschicht umfasst,
wobei die Kationenaustauschschicht ein Material umfasst, das ausgewählt ist aus der Gruppe, bestehend aus: Perfluorkohlenstoffsulfonsäurepolymeren und Polysulfonsäurepolymeren, und
wobei die Anionenaustauschschicht ein Material umfasst, das ausgewählt ist aus der Gruppe, bestehend aus: quartären Ammoniumgruppen, tertiären Amingruppen, sekundären Amingruppen auf einem Polystyrol, Polysulfon, Poly(ethersulfon), Poly(vinylidenfluorid) (PVDF).

## Revendications

1. Dispositif de capture et de conversion de dioxyde de carbone comprenant :
(A) un premier réacteur comprenant une membrane d'échange d'anion placée entre une anode poreuse et une cathode poreuse, l'anode contenant ou étant reliée physiquement ou électriquement à un ou des catalyseurs d'évolution de l'oxygène et d'évolution du dioxyde de carbone, et la cathode contenant ou étant reliée physiquement ou électriquement à un catalyseur de réduction de l'oxygène, l'anode du premier réacteur étant de préférence une photoanode et/ou la cathode du premier réacteur étant de préférence une photocathode ;
(B) un deuxième réacteur comprenant une membrane bipolaire placée entre une anode poreuse et une cathode poreuse, l'anode contenant ou étant reliée physiquement ou électriquement à un catalyseur d'évolution de l'oxygène, et la cathode contenant ou étant reliée physiquement ou électriquement à un catalyseur de réduction du dioxyde de carbone, l'anode du deuxième réacteur étant de préférence une photoanode ;
au moins une de l'anode et de la cathode pour le premier comme le deuxième réacteur étant une photoanode ou une photocathode,
la cathode poreuse du premier réacteur ayant au moins une entrée de fluide capable de transporter du dioxyde de carbone, de l'air et de l'eau, éventuellement avec des espèces dissoutes, et l'anode poreuse du premier réacteur ayant au moins une entrée de fluide capable de transporter de l'eau, éventuellement avec des espèces dissoutes, et de l'oxygène,
la cathode poreuse du deuxième réacteur ayant au moins une sortie de fluide capable de transporter des produits organiques de réaction résultant de la réaction de réduction de dioxyde de carbone, et l'anode poreuse du deuxième réacteur ayant au moins une sortie de fluide capable de transporter de l'eau, éventuellement avec des espèces dissoutes, et de l'oxygène,
le dispositif de capture de dioxyde de carbone étant configuré pour transférer du fluide qui sort de la cathode poreuse du premier réacteur jusqu'à l'anode poreuse du deuxième réacteur, et pour transférer du fluide qui sort de l'anode poreuse du premier réacteur jusqu'à la cathode poreuse du deuxième réacteur.

2. Dispositif de capture et de conversion de dioxyde de carbone selon la revendication 1, dans lequel :
- la cathode poreuse du premier réacteur a une entrée de fluide et une sortie de fluide capables toutes les deux de transporter du dioxyde de carbone, de l'air et de l'eau, éventuellement avec des espèces dissoutes, et l'anode poreuse du premier réacteur a une entrée de fluide et une sortie de fluide capables toutes les deux de transporter de l'eau, éventuellement avec des espèces dissoutes, et de l'oxygène ;
- la cathode poreuse du deuxième réacteur a une entrée de fluide et une sortie de fluide capables toutes les deux de transporter des produits organiques de réaction qui résultent de la réaction de réduction de dioxyde de carbone, et l'anode poreuse du deuxième réacteur a une entrée de fluide et une sortie de fluide capables toutes les deux de transporter de l'eau, éventuellement avec des espèces dissoutes, et de l'oxygène,
la sortie de fluide de la cathode poreuse du premier réacteur étant reliée de manière fluidique à l'entrée de fluide de l'anode poreuse du deuxième réacteur, et la sortie de fluide de l'anode poreuse du premier réacteur étant reliée de manière fluidique à l'entrée de fluide de la cathode poreuse du deuxième réacteur.

3. Dispositif de capture et de conversion de dioxyde de carbone selon la revendication 1, dans lequel les premier et deuxième réacteur sont placés dans un bloc consolidé séparé par un séparateur de telle sorte que la cathode poreuse du premier réacteur est située à l'opposé de l'anode poreuse du deuxième réacteur et séparée de là par le séparateur, et l'anode poreuse du premier réacteur est à l'opposé de la cathode poreuse du deuxième réacteur et séparée de là par le séparateur, et une conduite de fluide unique comprenant l'entrée de fluide de la cathode poreuse du premier réacteur et la sortie de fluide de l'anode poreuse du deuxième réacteur s'étend le long d'une paroi du bloc consolidé, et une autre conduite de fluide unique comprenant l'entrée de fluide de l'anode poreuse du premier réacteur et la sortie de fluide de la cathode poreuse du deuxième réacteur s'étend le long d'une autre paroi du bloc consolidé, les deux parois se faisant face et les deux étant en contact avec le séparateur.

4. Dispositif de capture et de conversion de dioxyde de carbone selon l'une quelconque des revendications 1 à 3, dans lequel l'anode poreuse du premier réacteur comprend un ou plusieurs de Ni, NiOₓ, Co₂O₃, NiCo₂O₄, NiFe₂O₄, Cu_{0,5}Co_{2,5}O₄, CoPi, SrCoO₃, IrOₓ, RuOₓ, et/ou PtOₓ, avec x s'étendant de 0 à 2, de préférence l'anode du premier réacteur est une photoanode comprenant BiVO₄, TaOₓN_{y} avec x et y s'étendant de 0 à 2, LaTiO₂N, BaTaO₂N, SrTaO₂N, WO₃, CuWO₄, Fe₂O₃, ZnFe₂O₄, et/ou TiO₂, et de préférence encore BiVO₄, TiO₂, WO₃, et peut comprendre en outre des matières de (co)catalyseur basées sur un ou plusieurs de : Ni, Ni Raney, Nico, NiFe, NiP, CoP, CuCo, CoPi, SrCo, Ir, Ru, Mg, Ag, Au, LaNi, LaMn, Ag, Ru, Au, Pt, Pt₃M où M = Ni, Co, Y, PtRu, Co, NiP, CoP, FeP, NiCo, NiMo, NiW, et leurs oxydes métalliques.

5. Dispositif de capture de dioxyde de carbone selon l'une quelconque des revendications 1 à 4, dans lequel l'anode poreuse du deuxième réacteur comprend un ou plusieurs de Ni, NiOₓ, Co₂O₃, NiCo₂O₄, NiFe₂O₄, Cu_{0,5}Co_{2,5}O₄, CoPi, SrCoO₃, IrOₓ, RuOₓ, et/ou PtOₓ, avec x s'étendant de 0 à 2, et de préférence l'anode du premier réacteur est une photoanode comprenant BiVO₄, TaOₓN_{y}, avec x et y s'étendant de 0 à 2, LaTiO₂N, BaTaO₂N, CuWO₄, WO₃, et/ou TiO₂.

6. Dispositif de capture et de conversion de dioxyde de carbone selon l'une quelconque des revendications 1 à 5, dans lequel la cathode poreuse du premier réacteur comprend un ou plusieurs de Pt/C, Pt-Ru/C, Au/C, Ni/C et feutre de Ni, de préférence Pt, Pt-Ru/C, et de préférence encore la cathode est une photocathode comprenant : Si, MoS₂, MoSe₂, WS₂, GaP, CdS, CdSe, ZnSe, CuNbO₄, PMPDI, InP, WSe₂, ZnFe₂O₄, CuNbO₃, PMPDI, Cu₂O, g-C₃N₄, CIGS, CIGSe, CaFeO₂, et/ou CuFeO₂, et peut comprendre en outre des matières de (co)catalyseur basées sur un ou plusieurs de : Ni, Ni Raney, LaNiO₃, LaMnO₃, Ag, Ru, Au, Pt, Pt₃M où M = Ni ou Co ou Y, PtRu, Co, NiPₓ, CoPₓ, FePₓ, NiCo, NiMo, NiW, Ir, NiCo₂Pₓ, Mg, Ru, Pt, Rh, et/ou RhOₓ, avec x s'étendant de 0 à 2.

7. Dispositif de capture et de conversion de dioxyde de carbone selon l'une quelconque des revendications 1 à 6, dans lequel la cathode poreuse du deuxième réacteur comprend un ou plusieurs de : In, Sn, Cd, Pd, Hg, Ag, Au, Zn, Cu supporté sur du carbone dopé N, Cu recouvert d'un film mince organique de tetrahydro-4,4'-bipyridine substitué N-aryle-, d'alliages de Cu, d'alliages de CuSn ou de CuAg, de Cu supporté par du carbone synthétisé par une méthode de Cu-Li amalgamé.

8. Dispositif de capture et de conversion de dioxyde de carbone selon l'une quelconque des revendications 1 à 7, dans lequel l'anode poreuse du premier et/ou deuxième réacteur et/ou la cathode poreuse du premier et/ou deuxième réacteur, comprennent des substrats poreux, tels que ceux sous forme de maille, de feutre ou de mousse, les substrats poreux comprenant une matière choisie dans le groupe se composant du carbone ; du titane ; du tungstène ; de l'acier inoxydable ; du nickel ; et d'oxydes conducteurs.

9. Dispositif de capture et de conversion de dioxyde de carbone selon l'une quelconque des revendications 1 à 8, dans lequel la membrane d'échange d'anion du premier réacteur comprend une matière choisie dans le groupe se composant de : matières contenant des groupes d'ammonium quaternaire ; polyuréthane de faible densité avec des groupes d'ammonium quaternaire ; matières contenant des groupes imidazolium ou polybenzimidazole ; des polysulfones quaternisés réticulés tri- ou di-amine; et du poly(aryl piperidinium).

10. Dispositif de capture et de conversion de dioxyde de carbone selon la revendication 9, dans lequel la membrane d'échange d'anion du premier réacteur comprend une matière avec des groupes de chlorure de vinylbenzyle et d'imidazolium.

11. Dispositif de capture et de conversion de dioxyde de carbone selon les revendications 1 à 10 dans lequel la membrane bipolaire du deuxième réacteur comprend une couche d'échange de cation et une couche d'échange d'anion,
la couche d'échange de cation comprenant une matière choisie dans le groupe se composant de : polymères d'acide perfluorocarbosulfonique, polymères d'acide polysulfonique, polymères d'acide carboxylique, polymères d'acide phosphonique, polybenzimidazoles, acides polyacryliques, matières de membrane d'hydrocarbure, oxyde (poly p-phénylène), alginate de sodium, chitosane modifié, polychlorure de vinyle, et polyéther éther cétone, et
la couche d'échange d'anion comprend une matière choisie dans le groupe se composant de : groupes d'ammonium quaternaire, groupes d'amine tertiaire, groupes d'amine secondaire sur un polystyrène, polysulfone, polyéthersulfone, polyfluorure de vinylidène (PVDF).

12. Dispositif de capture et de conversion de dioxyde de carbone selon la revendication 11 dans lequel la membrane bipolaire du deuxième réacteur comprend une couche d'échange de cation et une couche d'échange d'anion,
la couche d'échange de cation comprenant une matière choisie dans le groupe se composant de : polymères d'acide perfluorocarbosulfonique et polymères d'acide polysulfonique, et
la couche d'échange d'anion comprend une matière choisie dans le groupe se composant de : groupes d'ammonium quaternaire, groupes d'amine tertiaire, groupes d'amine secondaire sur un polystyrène, polysulfone, polyéthersulfone, polyfluorure de vinylidène (PVDF).
